# EUROPÄISCHE PATENTANMELDUNG

(11) **EP 0 965 783 A2**
(43) Veröffentlichungstag der Anmeldung: **22.12.1999**
(21) Anmeldenummer: 98120382.1
(22) Anmeldetag: 28.10.1998
(51) Int. Cl.: F16L 47/00, F16L 23/028

(54) **Aufsteckflansch für Rohrleitungen**

(30) Priorität: 20.06.1998 DE 29811099 U
(71) Anmelder: Kremo Werke Hermanns GmbH & Co. Kommanditgesellschaft, 47798 Krefeld (DE)
(72) Erfinder:
(74) Vertreter: Stark, Walter, Dr.-Ing.

(57) **Zusammenfassung**

Die Erfindung betrifft einen Aufsteckflansch (1) für Rohrleitungen (2) mit einem auf ein Rohrleitungsende aufsteckbaren, insbesondere aus Kunststoff bestehenden Rohrstutzen (3), der eine Dichtfläche (4) aufweist, und mit einem auf den Rohrstutzen (3) aufgeschobenen Ring (5) als Überwurfflansch, der Durchgangslöcher (7) für Befestigungsschrauben (8) aufweist. Um einen Aufsteckflansch (1) anzugeben, der sowohl den Einsatz kürzerer Befestigungsschrauben (8) ermöglicht als auch Abmessungsschwankungen des Rohrstutzens (3) ausgleicht, soll der Ring (5) radial geneigt sein.

## Beschreibung

Die Erfindung betrifft einen Aufsteckflansch für Rohrleitungen mit einem auf ein Rohrleitungsende aufsteckbaren, insbesondere aus Kunststoff bestehenden Rohrstutzen, der eine Dichtfläche aufweist, und mit einem auf den Rohrstutzen aufgeschobenen Ring als Überwurfflansch, der Durchgangslöcher für Befestigungsschrauben aufweist.

Aus der Praxis sind derartige Aufsteckflansche insbesondere bei Rohrverbindungen für die chemische Industrie bekannt. Die Rohrleitungen als auch der Rohrstutzen bestehen dabei aus Kunststoff. Zur Verbindung zweier benachbarter Rohrleitungen wird über jeden Rohrstutzen ein Ring als Überwurfflansch geschoben. Dieser Ring weist Durchgangslöcher für Befestigungsschrauben auf und besteht ebenfalls aus Kunststoff. Damit der aus Kunststoff bestehende Ring den Belastungen standhält, weisen derartige Ringe eine große Dicke auf.

Nachteilig erweist sich bei der Verwendung von Ringen aus Kunststoff nicht nur die große Dicke, sondern auch dadurch bedingt die Verwendung von längeren Befestigungsschrauben und breiteren Spritzschutzbänder. Nachteilig ist ferner, daß diese Ringe lediglich in einem geringen Maße Ausdehnungsänderungen der Rohrstutzen infolge von beispielsweise Witterungs-, Wärme- und Umwelteinflüssen aufnehmen können.

Aufgabe der Erfindung ist es, die vorgenannten Nachteile zu vermeiden und einen Aufsteckflansch anzugeben, der sowohl den Einsatz kürzerer Befestigungsschrauben ermöglicht als auch Abmessungsschwankungen des Rohrstutzens ausgleicht.

Diese Aufgabe wird dadurch gelöst, daß der Ring radial geneigt ist. Werden nun die Befestigungsschrauben angezogen, so verändert sich die anfangs radial geneigte Fläche des Ringes in eine nahezu senkrecht zur Strömungsrichtung stehende Fläche. Hierdurch entsteht eine zusätzliche Spannung. Durch die federnde Ausbildung des Ringes werden Ausdehnungen bzw. Schrumpfungen des Rohrstutzens leicht aufgenommen und ausgeglichen, ohne daß es zu einer Leckage kommt. Durch die geneigte Fläche kann die Materialdicke des Ringes geringer sein.

Vorteilhafterweise kann der Ring an dem Innenrand einen schräg nach innen gerichteten Kragen aufweisen. Infolge dieser schrägen nach innen gerichteten Ausbildung des Kragens wird sichergestellt, daß die Kräftelinien der Befestigungsschrauben nie parallel zu den Kräftelinien in dem Kragen verlaufen. Dies gewährleistet eine ausreichende Federwirkung des Ringes selbst im verschraubten Zustand.

Damit der Ring sich nicht im montierten Zustand in den aus Kunststoff bestehenden Rohrstutzen eindrückt bzw. eingräbt, kann der Innenrand des Ringes bzw. der schräg an dem Innenrand des Ringes angeformte und nach innen gerichteten Kragen an seinem freien Rand eine in Richtung auf die Rohrleitung weisende Abbiegung aufweisen. Hierdurch liegt der Ring mit einer größeren Fläche auf dem Rohrstutzen auf. Ferner rollt sich der Ring mit der Abbiegung während des Verschraubens des Aufsteckflansches auf dem Rohrstutzen ab.

Zusätzlich kann der Ring an dem Außenrand einen sich axial erstreckenden Kragen aufweisen.

Vorzugsweise beträgt der Neigungswinkel des Ringes etwa 5°. Es hat sich gezeigt, daß sich bei einem derartigen Neigungswinkel die günstigsten Federungseigenschaften ergeben.

Zweckmäßigerweise kann der Ring aus Edelstahl sein. Derartige Ringe sind beispielsweise im Außenbereich äußerst beliebt, da sie absolut korrosionsbeständig sind. Auch sind sie besonders gut in der chemischen Industrie verwendbar, da sie säure- bzw. laugenbeständig sind.

Der Rohrstutzen kann innenseitig einen an die Dichtfläche angrenzenden, umlaufenden und etwa der Höhe der Wanddicke der eingesteckten Rohrleitung entsprechenden Anschlag aufweisen.

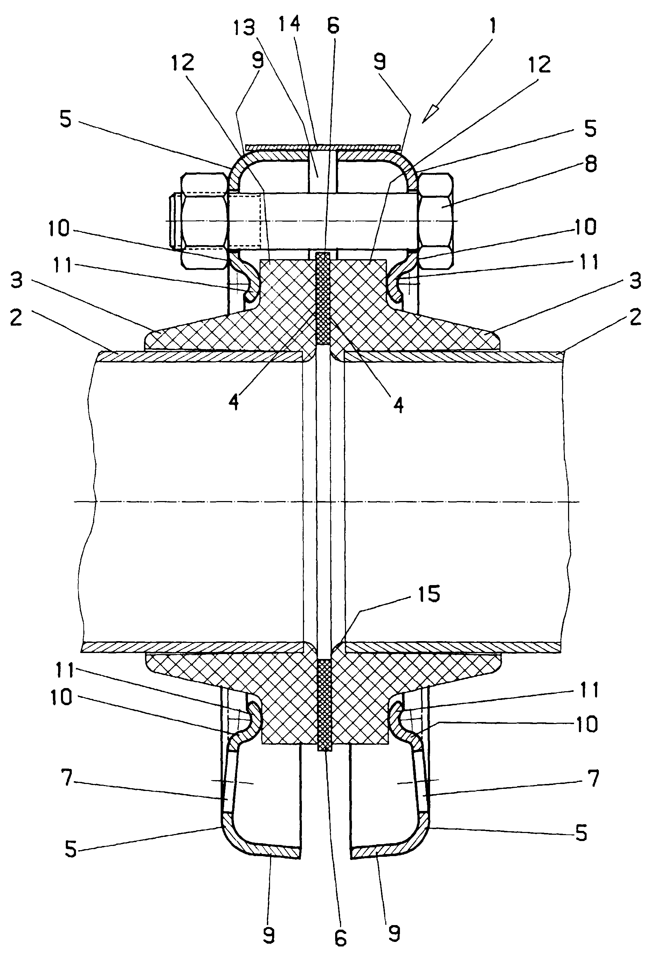

Im folgenden wird ein der Zeichnung dargestelltes Ausführungsbeispiel der Erfindung erläutert.

Die einzige Figur zeigt einen Schnitt durch zwei über Aufsteckflansche 1 miteinander verbundene Rohrleitungen 2. Die Aufsteckflansche 1 bestehen aus einem Rohrstutzen 3, der eine Dichtfläche 4 aufweist, und einem Ring 5 als Überwurfflansch. Sowohl die Rohrleitungen 2 als auch die Rohrstutzen 3 sind in dem dargestellten Ausführungsbeispiel aus Kunststoff.

Bei der Montage wird jeweils ein Rohrstutzen 3 auf ein Ende einer Rohrleitung 2 aufgesteckt und zum Zwecke der Fixierung mit dieser verklebt. Zur Abdichtung der durch die Aufsteckflansche 1 verbundenen Rohrleitungen 2 ist zwischen den Dichtflächen 4 zweier benachbarter Rohrstutzen 3 ein Dichtring 6 vorgesehen. Die Rohrleitungen 2 werden mittels zweier Ringe 5 als Überwurfflansche, die auf die Rohrstutzen 3 geschoben werden, zusammengehalten.

Der Ring 5, der radial geneigt ist, weist Durchgangslöcher 7 für Befestigungsschrauben 8 auf. Außenseitig ist an dem Ring 5 ein sich axial zur Rohrleitung 2 erstreckender Kragen 9 vorgesehen, der in Richtung der Dichtfläche 4 des Rohrstutzens 3 gerichtet ist. An dem Innenrand weist der Ring 5 einen schräg nach innen gerichteten Kragen 10 auf, an dem wiederum eine in Richtung die Rohrleitung 2 weisende Abbiegung 11 vorgesehen ist. Diese Abbiegung 11 verhindert ein Eindrücken bzw. Eingraben des Ringes 5 entweder mit dem Innenrand oder - wie in dem Ausführungsbeispiel dargestellt - mit dem schräg an den Innenrand des Ringes 5 angeformten und nach innen gerichteten Kragen 10 in den aus Kunststoff bestehenden Rohrstutzen 3, da der Ring 5 mit einer größeren Fläche auf einem Vorsprung 12 des Rohrstutzens 3 aufliegt und die Abbiegung 11 ferner keine scharfen Kanten aufweist.

In dem dargestellten Ausführungsbeispiel weisen die Ringe 5 lediglich einen nach innen gerichteten Kragen 10 geringer Höhe auf. Dieser kann aber je nach Anwendung auch höher ausgebildet sein. Durchaus denkbar ist aber auch, daß auf die Ausbildung eines nach innen gerichteten Kragens 10 verzichtet wird und somit die in Richtung auf die Rohrleitung 2 weisende Abbiegung 11 direkt an dem Innenrand des Ringes 5 angeformt ist.

Beim Verbinden zweier Rohrleitungen 2 werden zunächst die Ringe 5 über die Rohrstutzen 3 geschoben, so daß die Abbiegung 11 eines jeden Ringes 5 auf dem betreffenden Vorsprung 12 eines Rohrstutzens 3 aufliegt. Dies ist im unteren Teil der Figur zu sehen. Anschließend werden die Befestigungsschrauben 8 durch die sich gegenüberliegenden Durchgangslöcher 7 der Ringe 5 gesteckt und angezogen.

Durch das Anziehen der Befestigungsschrauben 8 wird die anfangs radial geneigte Fläche des Ringes 5 in eine nahezu senkrecht zur Strömungsrichtung stehende Fläche, wie im oberen Teil der Figur deutlich zu erkennen ist, bewegt. Durch diese federnde Ausbildung des Ringes 5 können Schwankungen der Dicke des Rohrstutzens 3 beispielsweise infolge von Temperaturschwankungen ausgeglichen werden.

Nach dem Verschrauben verbleibt zwischen den außenseitigen Kragen 9 ein umlaufender Spalt 13, über den ein Spritzschutzband 14 mit nicht dargestellten Haltenocken und Ablaufsicken geschraubt wird. Das Spritzschutzband 14 verhindert, daß im Falle einer Leckage die in den Rohrleitungen 2 transportierten Flüssigkeiten nicht senkrecht zur Strömungsrichtung, sondern infolge der Umlenkung durch das Spritzschutzband 14, parallel zur Strömungsrichtung austreten. Hierdurch wird die Verletzungsgefahr beim Bedienerpersonal im Falle eines Unfalles verringert.

Wie der Figur weiterhin zu entnehmen ist, weist jede Rohrleitung 2 im Bereich der Dichtfläche 4 einen innenseitig umlaufenden Anschlag 15 auf, den die Rohrleitung 2 im eingesteckten Zustand berührt. Die Höhe des Anschlages 15 entspricht dabei in etwa der Wanddicke der Rohrleitung 2.

## Patentansprüche

1. Aufsteckflansch (1) für Rohrleitungen (2) mit einem auf ein Rohrleitungsende aufsteckbaren, insbesondere aus Kunststoff bestehenden Rohrstutzen (3), der eine Dichtfläche (4) aufweist, und mit einem auf den Rohrstutzen (3) aufgeschobenen Ring (5) als Überwurfflansch, der Durchgangslöcher (7) für Befestigungsschrauben (8) aufweist, dadurch gekennzeichnet, daß der Ring (5) radial geneigt ist.

2. Aufsteckflansch (1) nach Anspruch 1, dadurch gekennzeichnet, daß der Ring (5) an dem Innenrand einen schräg nach innen gerichteten Kragen (10) aufweist.

3. Aufsteckflansch (1) nach Anspruch 1 oder 2, dadurch gekennzeichnet, daß der Innenrand des Ringes (5) bzw. der schräg an dem Innenrand des Ringes (5) angeformte und nach innen gerichtete Kragen (10) an seinem freien Rand eine in Richtung auf die Rohrleitung (2) weisende Abbiegung (11) aufweist.

4. Aufsteckflansch (1) nach einem der Ansprüche 1 bis 3, dadurch gekennzeichnet, daß der Ring (5) an dem Außenrand einen sich axial erstreckenden Kragen (9) aufweist.

5. Aufsteckflansch (1) nach einem der Ansprüche 1 bis 4, dadurch gekennzeichnet, daß der Neigungswinkel des Ringes (5) etwa 5° ist.

6. Aufsteckflansch (1) nach einem der Ansprüche 1 bis 5, dadurch gekennzeichnet, daß der Ring (5) aus Edelstahl ist.

7. Aufsteckflansch (1) nach einem der Ansprüche 1 bis 6, dadurch gekennzeichnet, daß der Rahrstutzen (3) innenseitig einen an die Dichtfläche (4) angrenzenden, umlaufenden und etwa der Höhe der Wanddicke der eingesteckten Rohrleitung (2) entsprechenden Anschlag (15) aufweist.
